# EUROPÄISCHE PATENTSCHRIFT

(11) **EP 1 098 751 B1**
(45) Veröffentlichungstag und Bekanntmachung des Hinweises auf die Patenterteilung: **02.01.2003**
(21) Anmeldenummer: 99941439.4
(22) Anmeldetag: 17.07.1999
(51) Int. Cl.: B29C 65/16, B23K 26/06

(54) **VERFAHREN UND VORRICHTUNG ZUM SCHWEISSEN VON THERMOPLASTISCHEN KUNSTSTOFFEN MIT LASERLICHT**
METHOD AND DEVICE FOR WELDING THERMOPLASTIC SYNTHETIC MATERIALS USING LASER LIGHT
PROCEDE ET DISPOSITIF DE SOUDAGE AU LASER DE MATERIAUX SYNTHETIQUES THERMOPLASTIQUES

(30) Priorität: 17.07.1998 DE 19832168
(43) Veröffentlichungstag der Anmeldung: 16.05.2001
(73) Patentinhaber: Lisa Laser Products OHG Fuhrberg & Teichmann, 37191 Katlenburg-Lindau (DE)
(72) Erfinder: FUHRBERG, Peter, D-37191 Katlenburg-Lindau (DE); POTT, Harald, D-42499 Hückeswagen (DE); SAUERWALD, Christian, D-66606 St. Wendel (DE)
(74) Vertreter: Patentanwälte Rehberg + Hüppe
(86) Internationale Anmeldenummer: EP9905109
(87) Internationale Veröffentlichungsnummer: WO00003865

(56) Entgegenhaltungen:
- EP-A- 0 131 918
- EP-A- 0 398 447
- WO-A-97/47796
- DE-A- 1 479 239
- DE-A- 3 621 030
- DE-A- 4 225 680
- DE-A- 4 432 081
- DE-A- 19 700 518
- DE-A- 19 750 263
- DE-U- 29 621 859
- FR-A- 1 476 398
- GB-A- 1 051 397
- GB-A- 1 528 452
- US-A- 3 974 016
- US-A- 4 959 522

## Beschreibung

Die Erfindung bezieht sich auf ein Verfahren zum Schweißen von thermoplastischen Kunststoffen mit Laserlicht, wobei das Laserlicht in einen Schweißbereich eines Werkstücks oder mehrerer aneinander angrenzender Werkstücke aus thermoplastischen Kunststoff gerichtet wird. Weiterhin bezieht sich die Erfindung auf eine Vorrichtung zum Schweißen von thermoplastischen Kunststoffen mit Laserlicht gemäß dem Verfahren, mit einem Laser als Lichtquelle für das Laserlicht und mit einer Optik und/oder einem Lichtleiter zum Richten des Laserlichts in einen Schweißbereich eines Werkstücks oder mehrerer aneinander angrenzender Werkstücke aus thermoplastischem Kunststoff.

Das Schweißen von thermoplastischen Kunststoffen erfolgt üblicherweise durch Kontaktieren von Heizelementen an die thermoplastischen Kunststoffe. Durch Wärmeübertrag von den Heizelementen auf die thermoplastischen Kunststoffe werden diese aufgeheizt und plastifiziert,.bis beispielsweise eine Verbindung von zwei Werkstücken aus thermoplastischem Kunststoff möglich ist. Dabei besteht ein Nachteil darin, daß die thermoplastischen Kunststoffe an der Grenzfläche zu den Heizelementen ihre höchste Temperatur erreichen, d. h. besonders weitgehend plastifiziert sind. Die Plastifizierung des Kunststoffs wird aber eigentlich dort benötigt, wo beispielsweise die Verbindung von zwei Werkstücken erfolgen soll. Im Kontaktbereich zu den Heizelementen besteht vielmehr die Gefahr, daß beim Entfernen der Heizelemente von den Werkstücken die dort noch plastischen Werkstücke beschädigt werden. Entsprechend ist es bei vielerlei Anwendungen erforderlich, die Heizelemente zunächst abzukühlen und erst dann von den Werkstücken zu entfernen. Hierdurch werden jedoch die beim Verschweißen erreichbaren Taktzeiten erheblich verlängert. Ein weiterer Nachteil des Schweißens von thermoplastischen Kunststoffen unter Verwendung von Heizelementen liegt darin, daß für die Ausbildung von geometrisch kompliziert gestalteten Schweißnähten auch entsprechend kompliziert gestaltete Heizelemente benötigt werden, was insbesondere bei der Kleinserienfertigung oder der Einzelanfertigung kaum rentabel ist.

Bei einem aus der DE 42 25 679 A1 bekannten Verfahren der eingangs beschriebenen Art wird Laserlicht eines CO₂-Lasers mit einer Wellenlänge von 10,6 µm verwendet. Das Laserlicht ersetzt ein Heizelement und wärmt den thermoplastischen Kunststoff direkt auf. Laserlicht mit einer Wellenlänge von 10,6 µm dringt aber nicht nennenswert in die Tiefe eines Werkstücks aus thermoplastischem Kunststoff ein, selbst wenn der Kunststoff im Wellenlängenbereich des sichtbaren Lichts transparent ist. Das Laserlicht mit der Wellenlänge von 10,6 µm wird vielmehr nach wenigen Zehntel-mm Werkstücktiefe vollständig absorbiert und in Wärme umgewandelt. Das heißt, wie bei der Verwendung eines Heizelements fällt die Wärme im Bereich der der Schweißverbindung typischerweise abgekehrten Oberfläche des dem Laser zugekehrten Werkstücks an. Da das Laserlicht kontaktlos auf den thermoplastischen Kunststoff einwirken kann, besteht nicht die Gefahr einer Beschädigung des Werkstücks beim Entfernen eines Heizelements. Nach dem Schweißen muß das Werkstück aber trotzdem abgekühlt werden, damit seine durch die Aufheizung partiell besonders plastische und daher empfindliche Oberfläche nicht beschädigt wird. Dies steht kurzen Taktzeiten beim Schweißen ebenso entgegen wie der Wärmetransport von der Oberfläche der Werkstücke bis in den Bereich der eigentlichen Schweißung hinein. Weiterhin ist bei dem bekannten Verfahren nachteilig, daß die zu seiner Durchführung erforderlichen Vorrichtungen sehr kostspielig sind. CO₂-Laser sind bereits an sich aufwendig. Hinzu kommt, daß derzeit keine geeigneten Lichtleiter für Laserlicht mit einer Wellenlänge von 10,6 µm bekannt sind. Entsprechend muß das Laserlicht mit dieser Wellenlänge mit komplizierten Spiegelgelenkarmen o. dgl. auf das jeweilige Werkstück gerichtet werden.

Aus der DE 38 13 570 A1 ist es bei einem Verfahren zum Schweißen von thermoplastischen Kunststoffen mit Laserlicht grundsätzlich bekannt, die Wellenlänge des Laserlichts so auszuwählen, daß eine vollständige Absorption des Laserlichts in den jeweiligen Werkstücken erfolgt. Konkrete Wellenlängen für das Laserlicht sind dabei aber nicht angegeben.

Aus der DE 44 32 081 A1 ist es bekannt, bei einem Verfahren zum Schweißen von thermoplastischen Kunststoffen mit Laserlicht, Laserlicht mit einer Wellenlänge von 0,50 bis 10,90 µm zu verwenden. Dabei soll ein Wellenlängenbereich von 0,70 bis 3 µm besonders bevorzugt sein. Für diesen bevorzugten Wellenlängenbereich wird als Beispiel ausschließlich ein Nd:YAG-Laser angeführt, dessen Laserlicht bekanntermaßen eine Wellenlänge von 1,06 µm aufweist. Laserlicht mit dieser Wellenlänge wird von bekannten thermoplastischen Kunststoffen ohne Zusatzstoffe nur zu geringen Anteilen absorbiert. Um eine gute Umsetzung des Laserlichts in Wärme zu erreichen, muß daher eines der beiden Werkstücke bei der Wellenlänge von 1,06 µm nicht-transparent sein, oder es muß eine hinter den Werkstücken angeordnete schwarze Fläche vorgesehen sein. An der jeweiligen Grenzfläche zu dem transparenten Kunststoff erfolgt eine Umwandlung des Laserlichts in Wärme. Wenn es sich um eine zusätzliche schwarze Fläche handelt, ergeben sich dieselben Nachteile wie bei einem anderweitig erwärmten Heizelement. Bei einer Kombination eines Werkstücks aus thermoplastischem Kunststoff ohne Zusatzstoffe, der für Licht mit einer Wellenlänge von 1,06 µm transparent ist, und einem Werkstück aus thermoplastischem Kunststoff, der durch Zusatzstoffe bei dieser Wellenlänge gerade nicht transparent ist, ergibt sich bei flächiger Verbindung der beiden Werkstücke zwar eine Konzentration der Wärmeumwandlung auf das Gebiet der eigentlichen Schweißung, ein Verschweißen von zwei Werkstücken auf Stoß beispielsweise ist aber nicht möglich. Darüber hinaus sind durch die Notwendigkeit, ein Werkstück aus bei der relevanten Wellenlänge nicht-transparentem thermoplastischen Kunststoff auszubilden, starke Beschränkungen hinsichtlich der Anwendbarkeit des bekannten Verfahrens gegeben.

Aus der DE 25 44 371 ist es bekannt, sehr dünne Folien aus thermoplastischem Kunststoff von etwa 15 µm Dicke unter Verwendung von Laserlicht mit einer Wellenlänge von 10,6 µm flach miteinander zu verschweißen. Dazu wird das Laserlicht durch die Folien aus thermoplastischen Kunststoff hindurch auf einen Unterlagsstab gerichtet. Dies ist bei der kurzen Absorptionslänge von Laserlicht dieser Wellenlänge in thermoplastischen Kunststoffen nur bei der geringen Dicke der Folien möglich. Der Unterlagsstab wird durch das Laserlicht auf eine Temperatur von annähernd 1900 °C erwärmt, bei der er eine Strahlung im Spektralbereich von 1,7 bis 3,4 µm emittiert. Diese Strahlung soll durch den Kunststoff, bei dem es sich um Polyethylen handelt, dann ausreichend absorbiert werden, obwohl die Absorptionslänge von Licht in Kunststoff bei kürzeren Wellenlängen größer ist als bei dem ursprünglichen Laserlicht mit der Wellenlänge von 10,6 µm. So ist tatsächlich nur ein sehr begrenzter Teil der eingestrahlten Lichtenergie für eine Erwärmung des relevanten Bereichs der Folien nutzbar. Weiterhin muß aufgrund der hohen Temperatur des Unterlagsstabs beim Verschweißen der Folien ein Kontakt mit ihm in aufwendiger Weise vermieden werden. In einer solchen Anordnung ist unter keinen Umständen eine Konzentrierung der thermischen Strahlung eines heißen Unterlagsstab in dem Spektralbereich von 1,7 bis 3,4 µm auf einen begrenzten Schweißbereich möglich, da die von dem ursprünglichen Laserlicht erwärmten Bereiche des Unterlagsstabs als in alle freie Raumrichtungen emittierende Punktlichtquellen wirken.

Die DE 296 21 859 U1 offenbart einen diodengepumpten Laser, dessen Kristall ein Tm:YAG-Kristall, ein Tm, Ho:YAG-Kristall, ein Tm:YLF-Kristall oder ein Tm, Ho:YLF-Kristall sein kann und der eine Wellenlänge des abgestrahlten Laserlichts von ca. 2 µm aufweist. Das Laserlicht kann in einen wasserarmen oder wasserfreien Lichtwellenleiter, insbesondere in eine Quarz-Quarz-Faser eingekoppelt werden. Quarz-Quarz-Faser weisen bei Wellenlängen im Bereich von 2 µm einen so großen Tranmissionskoeffizienten auf, dass eine Führung des Laserlichts mit geringer Dämpfung auch über größere Faserlängen von 1 bis 3 m möglich ist.

Der Erfindung liegt die Aufgabe zugrunde, ein Verfahren zum Schweißen von thermoplastischen Kunststoffen der eingangs beschriebenen Art aufzuzeigen, das die problemlose und schnelle Verschweißung auch dickerer Werkstücke aus Kunststoff unter Ausbildung dauerhafter Schweißnähte, insbesondere von Stoßnähten, ermöglicht. Weiterhin soll eine Vorrichtung zur Durchführung des Verfahrens aufgezeigt werden.

Bei dem Verfahren der eingangs beschriebenen Art wird die Aufgabe erfindungsgemäß dadurch gelöst, daß das Laserlicht eine Wellenlänge von 1,8 bis 2,2 µm, d. h. von etwa 2 µm, aufweist. Laserlicht in diesem Wellenlängenbereich wird von vielen thermoplastischen Kunststoffen direkt, d. h. unabhängig von irgendwelchen Füll- oder Zusatzstoffen, über eine Absorptionslänge von einigen mm absorbiert. Das heißt, ein mit Laserlicht dieser Wellenlänge bestrahltes Werkstück wird in der Tiefe aufgewärmt, also ggf. genau dort, wo eine Schweißnaht ausgebildet werden soll. So lassen sich Kunststoffe wie Polyamide, Polyacetale, Polyester, Polyethylene, Polypropylene, Polycarbonate, Polyolephine, die häufig nicht zu verkleben sind, problemlos dauerhaft miteinander verschweißen. Besonders gute Erfahrungen liegen mit Polypropylenen vor. Auch das Verschweißen unterschiedlicher thermoplastischer Kunststoffe ist machbar. Eine Übersicht Über die nach derzeitigem Stand einsetzbaren Kunststoffe gibt die nachstehende Tabelle, in der die Angabe "Erscheinungsform" sich auf den sichtbaren Lichtbereich bezieht und mit "farbig" auf durch zugesetzte Farbstoffe eingefärbte Varianten des jeweiligen Kunststoffs verweist. Die zugesetzten Farbstoffe verhalten sich bei dem neuen Verfahren, das die intrinsische Absorption der Thermoplastischen Kunststoffe von Laserlicht mit einer Wellenlänge von ca. 2 µm ausnutzt, neutral. So können mit dem neuen Verfahren insbesondere auch Kunststoffe verschweißt werden, die im Wellenlängenbereich des sichtbaren Lichts transparent oder transluzent sind. Farbstoffe und andere Zusatzstoffe können den Kunststoffen jedoch aus anderen Gründen zugesetzt sein. Die Handhabung des Laserlichts mit einer Wellenlänge von ca. 2 µm ist problemlos. Es kann im wasserarmen oder wasserfreien Quarz-Quarz-Fasern ohne allzu große Dämpfung auch über größere Faserlängen geführt werden. In diesem Wellenlängenbereich ist eine Fokussierung des Laserlichts auf einen verfahrbaren Punkt oder einen Strich oder auch die nicht-fokussierende Projektion des Laserlichts auf einen Strich mit üblichen Optiken möglich, so daß auch sehr feine Schweißnähte ausgebildet werden können. Dies ist bis herab zu einer Breite von 0,1 mm möglich. Vorzugsweise werden durch das neue Verfahren die die beiden Werkstücke verbindenden Schweißnähte mit einer Breite von 0,7 bis 2 mm ausgebildet. Es sind ohne weiteres aber auch Schweißnähte mit größeren Breiten möglich. Materialstärken der beiden Werkstücke betragen typischerweise zwischen 50 µm und 5 mm, wobei der Schwerpunkt bei 0,2 bis 2 mm starken Folien liegt. Wenn die Werkstücke auf Stoß verschweißt werden, entspricht ihre Materialdicke genau der Breite der Schweißnaht. Die sinnvollen Materialdicken für ein Verschweißen auf Stoß beginnen bei 0,5 mm. Im Vergleich zu der Absorptionslänge von Laserlicht mit der Wellenlänge von 2 µm in thermoplastischen Kunststoffen von je nach Material ca. 1 bis 10 mm liegen die sinnvollen Materialdicken im Bereich der Schweißnaht in der gleichen Größenordnung oder sind bis zu etwa einer Größenordnung kleiner, wobei dann zwar eine geringere Leistungsausbeute des Laserlichts aber im Ausgleich eine besonders homogene Verteilung der Erwärmung über die Tiefe des von dem Laserlicht erfaßten Bereichs erzielt wird.

**Tabelle**

| Kunststoff | Erscheinungsform |
|---|---|
| PS | transparent o. farbig |
| PMMA | transparent o. farbig |
| PC | transparent o. farbig |
| PE | natur o. farbig |
| PA | natur o. farbig |
| POM | natur o. farbig |
| SAN | natur o. farbig |
| ABS | natur o. farbig |
| PP | natur o. farbig |
| SB | natur o. farbig |
| PVC | natur o. farbig |
| PET | natur o. farbig |
| PSU | natur o. farbig |
| PBT | natur o. farbig |
| TPE | natur o. farbig |

Mit dem neuen Verfahren können zwei Werkstücke aus Kunststoff überlappend miteinander verschweißt werden, wobei das Laserlicht quer zu den Werkstücken ausgerichtet wird. Typischerweise wärmt das Laserlicht die Werkstücke beiderseits des Kontaktbereichs auf, wobei eine Abschwächung durch Absorption im Bereich des hinteren Werkstücks durch einen hinter diesem Werkstück angeordneten Reflektor kompensiert werden kann. Der Reflektor selbst ist unkritisch, da er seinerseits nicht durch das Laserlicht aufgeheizt wird. Er kann sogar während der Verschweißung gekühlt werden.

Mit dem neuen Verfahren ist es insbesondere auch möglich, zwei Werkstücke aus Kunststoff auf Stoß miteinander zu verschweißen. Dabei wird das Laserlicht in einem definiert begrenzten, typischerweise sehr schmalen Bereich parallel zur Ebene des Stoßes auf beide Werkstücke gerichtet. Die aufeinanderstoßenden Schmalseiten der Werkstücke werden durch das Laserlicht über die gesamte Tiefe des Stoßes aufgewärmt. Auch hierbei kann wieder ein Reflektor eine Abschwächung des Laserlichts durch Absorption in Richtung der Stoßtiefe kompensieren. In der Möglichkeit, sowohl dünnere Folien, als auch dickere Werkstücke auf Stoß miteinander zu verschweißen zu können, ist ein besonderer Vorteil des neuen Verfahrens gegenüber dem Stand der Technik zu sehen.

Die Werkstücke können beim Verschweißen im Bereich einer gewünschten Schweißverbindung zwischen Halteelementen angeordnet werden, von denen mindestens eines das Laserlicht hindurchtreten läßt. Das andere Halteelement kann der bereits erwähnte Reflektor sein. Beide Halteelemente können beim Verschweißen gekühlt werden, so daß sich die wirksame Aufheizung der Werkstücke auf einen innenliegenden Bereich konzentriert. Dies ist beim flachen Verschweißen von beispielsweise Kunststoffolien sinnvoll. Beim Ausbilden einer Stoßnaht, die sich über die gesamte Stoßtiefe erstrecken soll, darf eine Kühlung der Halteelemente nicht so weit betrieben werden, daß die Werkstücke in der Nähe der Halteelemente nicht mehr plastifiziert werden.

Das neue Verfahren kann aber auch völlig kontaktlos durchgeführt werden, wobei die Werkstücke beim Verschweißen im Bereich einer gewünschten Schweißverbindung frei liegen.

Das Laserlicht kann bei dem neuen Verfahren mit einem Lichtleiter punktuell an das Werkstück bzw. die Werkstücke aus dem thermoplastischen Kunststoff herangeführt werden. Die Schweißnaht beim Verbinden von zwei Werkstücken kann so eine sehr komplizierte geometrische Gestaltung aufweisen, solange der Lichtleiter in ihrer Richtung geführt werden kann. Dies kann aber mit einfachen, vielfach eingesetzten Positioniervorrichtungen problemlos erfolgen.

Das Laserlicht kann aber auch über einen größeren linienförmigen Bereich einer gewünschten Verschweißung an die Werkstücke aus dem thermoplastischen Kunststoff herangeführt werden. Dies ist beispielsweise mit einer Lichtleiterplatte möglich, auf deren einen Schmalseite mehrere Laser angeordnet sind, während die gegenüberliegende Schmalseite zur Anlage an einem oder beiden der Werkstücke vorgesehen ist. In der Lichtleiterplatte wird das Laserlicht durch Totalreflexion gehalten, und die Lichtintensität des Laserlichts wird über die Breite der Platte homogenisiert.

Die Vorrichtung der eingangs beschriebenen Art ist erfindungsgemäß dadurch gekennzeichnet, daß der Laser das Laserlicht mit einer Wellenlänge von 1,8 bis 2,2 µm abstrahlt. Derartige Laser sind beispielsweise aus der DE-GM 296 21 859.6 bekannt. Die dort beschriebenen Laser mit einer Wellenlänge von ca. 2 µm sind für die Durchführung des Verfahrens besonders gut geeignet. Dabei handelt es sich um insbesondere diodengepumpte Tm:YAG-Tm, Ho:YAG-, Tm:YLF- bzw. Tm, Ho:YLF-Laser. Diese Festkörperlaser sind bereits ihrerseits vergleichsweise preisgünstig. Darüberhinaus kann auch ein geeigneter Diodenlaser verwendet werden, der das Laserlicht mit der Wellenlänge von 2 µm abstrahlt. Das Laserlicht mit der Wellenlänge von 2 µm kann zudem mit geringem Aufwand geleitet und fokussiert werden. Weiter stellt sich heraus, daß für die neue Vorrichtung in Vergleich zu einer entsprechenden Vorrichtung aus dem stand der Technik mit einem Hd:YAG-Laser ein Laser mit einer um etwa eine Größenordnung geringeren Lichtleistung ausreichend ist, da sein Laserlicht Überraschend effektiv und konzentriert den Kunststoff in den relevanten Bereichen des Werkstücks bzw. der Werkstücke aufheizt. Dennoch zeigt sich trotz der geringeren Lichtleistung schon binnen kurzer Einwirkzeiten des Laserlichts mit der Wellenlänge von ca. 2 µm eine stetige Erwärmung des thermoplastischen Kunststoffs, die im Ergebnis hohe Schweißgeschwindigkeiten bei gleichzeitig großer Qualität der entstehenden Schweißnähte erlaubt. In der bevorzugten Ausführungsform der neuen Vorrichtung ist der Laser ein kontinuierlich emittierender Strichlaser.

Die Erfindung wird im folgenden anhand von Ausführungsbeispielen näher erläutert und beschrieben. Dabei zeigt:
- Fig. 1: den prinzipiellen Aufbau zur Durchführung des neuen Verfahrens,
- Fig. 2: eine erste Ausführungsform des neuen Verfahrens,
- Fig. 3: eine Abwandlung der Ausführungsform des neuen Verfahrens gemäß Fig. 2,
- Fig. 4: eine zweite Ausführungsform des neuen Verfahrens,
- Fig. 5: eine Abwandlung der Ausführungsform des neuen Verfahrens gemäß Fig. 4,
- Fig. 6: eine zweite Ansicht zu der Abwandlung der zweiten Ausführungsform des neuen Verfahrens gemäß Fig. 5 und
- Fig. 7: Details einer Vorrichtung für eine weitergehende Abwandlung der Ausführungsform des Verfahrens gemäß den Fig. 5 und 6.

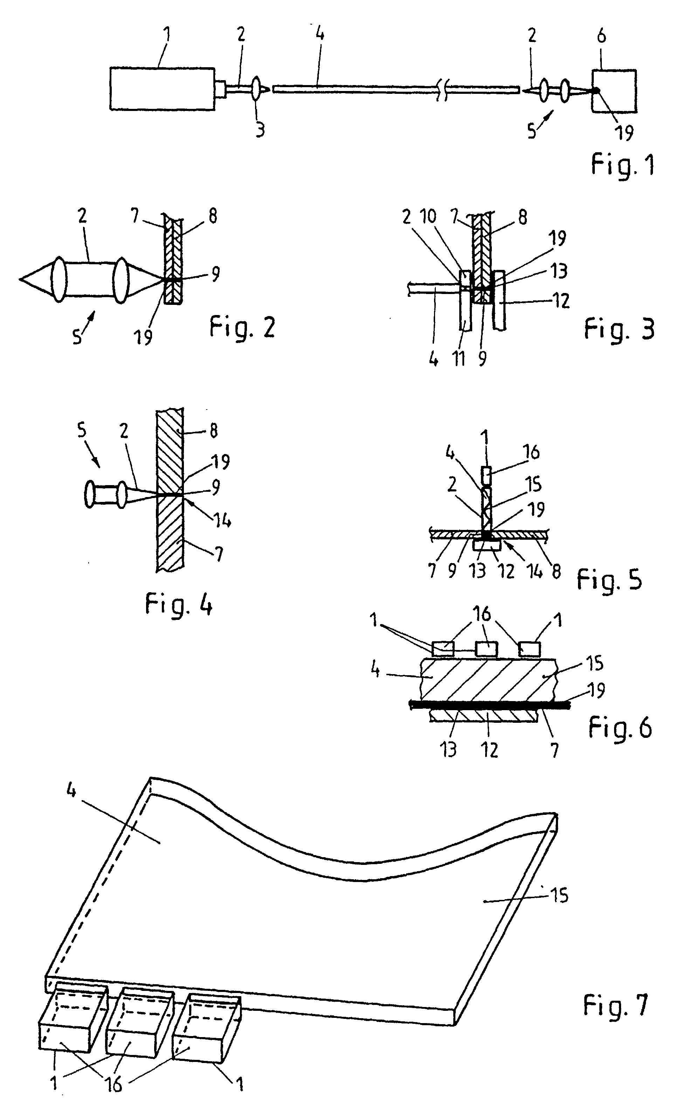

Fig. 1 zeigt einen Laser 1, bei dem es sich um einen diodengepumpten Tm:YAG-Festkörperlaser handelt, der Laserlicht 2 mit einer Wellenlänge von 2 µm abstrahlt. Das Laserlicht 2 wird mit einer Linse 3 in einen Lichtleiter 4 eingekoppelt. Der Lichtleiter ist eine wasserfreie Quarz-Quarz-Faser. Der Lichtleiter 4 weist nur eine geringe Dämpfung für das Laserlicht 2 auf, auch bei größeren Faserlängen. Das aus dem Lichtleiter 4 wieder austretende Laserlicht 2 wird von einer Optik 5 umgeformt und trifft anschließend auf ein Werkstück 6 aus thermoplastischem Kunststoff, beispielsweise aus einem Polyolephin. Das Laserlicht 2 wird in einem Schweißbereich 19 des Werkstücks 6 über eine Absorptionslänge von einigen mm absorbiert, d. h. in Wärme umgewandelt.

Die Erwärmung eines folienartigen Werkstücks 7 und eines dahinterliegenden weiteren folienartigen Werkstücks 8, die beide aus thermoplastischen Kunststoff bestehen, wird bei der Anordnung gemäß Fig. 2 zum flachen Verbinden der Werkstücke 7 und 8 durch eine Schweißnaht 9 genutzt, die sich in dem erwärmten Schweißbereich 19 ausbildet. Dabei erfolgt das Verschweißen der Werkstücke 7 und 8 kontaktlos, d. h. die Werkstücke 7 und 8 liegen im Bereich der Schweißnaht 9 völlig frei und mit Abstand zu der Optik 5.

Bei der Ausführungsform gemäß Fig. 3 ist auf die Optik 5 verzichtet. Der Lichtleiter 4 liegt vielmehr direkt an einer Quarzglasplatte 10 an, die ein erstes Halteelement 11 für das Paar der flach miteinander zu verbindenden Werkstücke 7 und 8 ausbildet. Auf der Rückseite der Werkstücke 7 und 8 ist ein zweites Halteelement 12 in Form eines Reflektors 13 vorgesehen. Das aus dem Lichtleiter 4 austretende Laserlicht 2 tritt durch die Quarzglasplatte 10 hindurch und wird dann schrittweise von den Werkstücken 7 und 8 absorbiert, wobei die Werkstücke 7 und 8 in dem Schweißbereich 19, d.h. im Bereich der gewünschten Schweißnaht 9, erwärmt werden. Der auf den Reflektor 13 auftreffende Rest des Laserlichts 2 wird auf die Werkstücke 8 und 7 zurückreflektiert, wodurch eine ungleichmäßige Verteilung der Erwärmung der Werkstücke 7 und 8 über den Schweißbereich 19 aufgrund der fortschreitenden Absorption zumindest teilweise kompensiert wird. Die Plastifizierung des Kunststoffs der Werkstücke 7 und 8 an den äußeren Oberflächen bewegt sich in derselben Größenordnung wie die Plastifizierung im Bereich der gegenseitigen Anlage der Werkstücke 7 und 8. Allein dies erlaubt es, die Halteelemente 11 und 12 nach der Ausführung der Schweißnaht 9 sehr rasch auseinander zu fahren, ohne die Schweißverbindung wieder zu beschädigen. Zudem ist es möglich, die Halteelemente 11 und 12 dauerhaft zu kühlen, da die Erwärmung der Werkstücke 7 und 8 im Kontaktbereich zu den Halteelementen 11 und 12 für die Ausbildung der Schweißnaht 9 unnötig ist.

Fig. 4 zeigt eine andere Ausführungsform des Verschweißens von zwei Werkstücken 7 und 8 mit dem Laserlicht 2. Die Werkstücke 7 und 8 aus thermoplastischen Kunststoff sind hier auf Stoß angeordnet. Das Laserlicht 2 aus der Optik 5 wird so auf die Werkstücke 7 und 8 gerichtet, daß beide Werkstücke 7 und 8 über die gesamte Tiefe des Stoßes 14 und damit der gewünschten Verschweißung 9 erwärmt werden. Bis zu einer Materialstärke der Werkstücke 7 und 8 von einigen mm ist dies ob der Wellenlänge des Laserlichts 2 von 2 µm problemlos möglich.

Während gemäß Fig. 4 die Werkstücke 7 und 8 im Bereich der Schweißnaht 9 nicht geführt bzw. gehalten sind, ist gemäß Fig. 5 eine rückwärtige Abstützung durch ein als Reflektor 13 ausgebildetes Halteelement 12 vorgesehen. Auf der Eintrittsseite des Laserlichts ist eine Quarzglasplatte 15 angeordnet, deren Schmalseite dem Halteelement 12 gegenüberliegt. Die Quarzglasplatte 15 dient als Lichtleiter 4 für das Laserlicht 2, das hier direkt von als Diodenlasern 16 ausgebildeten Lasern 1 auf der dem Reflektor 13 gegenüberliegenden Seite der Quarzglasplatte 15 in die Quarzglasplatte 15 eingekoppelt wird. Das Laserlicht 2 wird durch Totalreflexion in der Quarzglasplatte 15 geführt, wobei seine Intensitätsverteilung über die Breite der Quarzglasplatte 15 gleichzeitig homogenisiert wird, und trifft dann auf die Werkstücke 7 und 8 im Bereich des Stoßes 14, d. h. in dem Schweißbereich 19 bzw. der gewünschten Schweißnaht 9 auf.

Fig. 6 zeigt die Anordnung gemäß Fig. 5 aus einer zu Fig. 5 rechtwinklig verlaufenden Blickrichtung und läßt die Mehrzahl der Diodenlasern 16 erkennen.

Gemäß den Fig. 5 und 6 ist die Anlagefläche der Quarzplatte 15 an den Werkstücken 7 und 8 eben. Fig. 7 skizziert den Fall eines komplizierteren Verlaufs der gewünschten Schweißnaht, indem die den Diodenlasern 16 gegenüberliegende Schmalseite der Quarzplatte 15 einen komplizierten kurvenförmigen Verlauf aufweist. Die Verwendung einer Quarzplatte 15 als Lichtführung ist immer dann sinnvoll, wenn vergleichsweise breite Schweißnähte angelegt werden sollen und wenn eine Vielzahl von gleichartigen Schweißnähten ausgeführt werden sollen. Wechselnde Geometrien der Schweißnähte und besonders schmale Schweißnähte sind mit der Anordnung gemäß den Fig. 1-4 leichter zu befriedigen.

## Patentansprüche

1. Verfahren zum Schweißen von thermoplastischen Kunststoffen mit Laserlicht, wobei das Laserlicht in einen Schweißbereich eines Werkstücks oder mehrerer aneinander angrenzender Werkstücke aus thermoplastischem Kunststoff gerichtet wird, **dadurch gekennzeichnet, daß** das Laserlicht (2) eine Wellenlänge von 1,8 bis 2,2 µm aufweist, und daß die thermoplastischen Kunststoffe bei dieser Wellenlänge eine intrinsische Absorbtion mit einer Absorptionslänge von 1 bis 10 mm aufweisen.

2. Verfahren nach Anspruch 1, **dadurch gekennzeichnet, daß** der thermoplastische Kunststoff, aus dem die beiden Werkstücke (7, 8) ausgebildet sind, im Wellenlängenbereich des sichtbaren Lichts transparent oder transluzent ist.

3. Verfahren nach Anspruch 1 oder 2, **dadurch gekennzeichnet, daß** das Laserlicht (2) mit einer Optik (5) und/oder einem Lichtleiter (4) in den Schweißbereich gerichtet wird.

4. Verfahren nach Anspruch 1, 2 oder 3, **dadurch gekennzeichnet, daß** in dem Schweißbereich eine die beiden Werkstücke (7, 8) verbindende Schweißnaht mit einer Breite von 0,1 bis 5 mm, vorzugsweise mit einer Breite von 0,7 bis 2 mm, ausgebildet wird.

5. Verfahren nach einem der Ansprüche 1 bis 4, **dadurch gekennzeichnet, daß** die beiden Werkstücke (7, 8) eine Dicke von 50 µm bis 5 mm, insbesondere von 0,2 bis 2 mm, aufweisen.

6. Verfahren nach einem der Ansprüche 1 bis 5, **dadurch gekennzeichnet, daß** die Werkstücke (7, 8) beim Verschweißen im Bereich einer gewünschten Schweißverbindung (9) zwischen Halteelementen (11, 12) angeordnet werden, von denen mindestens eines das Laserlicht (2) hindurchtreten läßt.

7. Verfahren nach einem der Ansprüche 1 bis 6, **dadurch gekennzeichnet, daß** das Laserlicht (2) mit dem Lichtleiter (4) direkt an das Werkstück bzw. die Werkstücke (7, 8) aus dem thermoplastischem Kunststoff herangeführt wird.

8. Verfahren nach einem der Ansprüche 1 bis 7, **dadurch gekennzeichnet, daß** das Laserlicht (2) in einen plattenförmigen Lichtleiter (4) eingekoppelt und mit dem Lichtleiter (4) über einen linienförmigen Schweißbereich an das Werkstück bzw. die Werkstücke (7, 8) aus dem thermoplastischen Kunststoff herangeführt wird.

9. Vorrichtung zum Schweißen von thermoplastischen Kunststoffen mit Laserlicht nach einem der Ansprüche 1 bis 8, mit einem Laser als Lichtquelle für das Laserlicht und mit einer Optik und/oder einem Lichtleiter zum Richten des Laserlichts in einen Schweißbereich eines Werkstücks oder mehrerer aneinander angrenzender Werkstücke aus thermoplastischem Kunststoff, **dadurch gekennzeichnet, daß** der Laser (1) das Laserlicht (2) mit einer Wellenlänge von 1,8 bis 2,2 µm abstrahlt.

10. Vorrichtung nach Anspruch 9, **dadurch gekennzeichnet, daß** auf der der Optik (5) bzw. dem Lichtleiter (4) gegenüberliegenden Rückseite der Werkstücke (7, 8) ein Halteelement (12) in Form eines Reflektors (13) vorgesehen ist, der den durch die Werkstücke (7, 8) auftreffenden Rest des Laserlichts (2) auf die Werkstücke (7, 8) zurückreflektiert, wodurch eine ungleichmäßige Erwärmung der Werkstücke (7, 8) über den Schweißbereich (19) aufgrund der fortschreitenden intrinsischen Absorbtion zumindest teilweise kompensiert wird.

11. Vorrichtung nach Anspruch 9 oder 10, **dadurch gekennzeichnet, daß** der Laser (1) ein insbesondere diodengepumpter Tm:YAG-, ein Tm, Ho:YAG-, ein Tm:YLF- oder ein Tm, Ho:YLF-Laser oder ein Diodenlaser (16) ist.

## Claims

1. Method of welding thermoplastic synthetic materials using laser light, the laser light being directed into a welding region of one work piece or of a plurality of contiguous work pieces made of thermoplastic synthetic material, **characterized in that** the laser light (2) has a wave length ranging from 1.8 to 2.2 µm, and **in that** the thermoplastic synthetic materials have an intrinsic absorption with an absorption length ranging from 1 to 10 mm at this wave length.

2. Method according to claim 1, **characterized in that** the thermoplastic synthetic material, of which the two work pieces (7, 8) are made, is transparent or translucent in the range of wave lengths of visible light.

3. Method according to claim 1 or 2, **characterized in that** the laser light (2) is directed into the welding region by means of an optic (5) and/or a light guide (4).

4. Method according to claim 1, 2 or 3, **characterized in that** in the welding region a weld connecting the two work pieces (7, 8) and having a width ranging from 0.1 to 5 mm, particularly a width ranging from 0.7 to 2 mm, is formed.

5. Method according to one of the claims 1 to 4, **characterized in that** the two work pieces (7, 8) have a thickness ranging from 50 µm to 5 mm, particularly ranging from 0.2 to 2 mm.

6. Method according to one of the claims 1 to 5, **characterized in that** during welding the work pieces (7, 8) are arranged between supporting elements (11, 12) within the region of the desired weld (9), at least one of the supporting elements letting the laser light (2) pass through.

7. Method according to one of the claims 1 to 6, **characterized in that** by means of the light guide (4) the laser light (2) is directly guided onto the work piece or the work pieces (7, 8) made of thermoplastic synthetic material.

8. Method according to one of the claims 1 to 7, **characterized in that** the laser light (2) is coupled into a plate-shaped light guide (4) and guided onto the work piece or the work pieces (7, 8) made of the thermoplastic synthetic material over a line-shaped welding region by means of said light guide (4).

9. Device for welding thermoplastic synthetic materials using laser light according to one of the claims 1 to 8, the device comprising a laser as a light source for the laser light and an optic and/or a light guide for directing the laser light into a welding region of a work piece or of a plurality of contiguous work pieces made of thermoplastic synthetic material, **characterized in that** the laser (1) emits laser light (2) with a wave length ranging from 1.8 to 2.2 µm.

10. Device according to claim 9, **characterized in that** a supporting element (12) in form of a reflector (13) is provided at the Backside of the workpieces (7, 8) opposing the optic (5) or the light guide (4), the reflector reflecting the remainder of the laser light (2) passing through the work pieces (7, 8) back onto the work pieces (7, 8), whereby an uneven heating of the work pieces (7,8) over the welding region (19) caused by the progressing intrinsic absorption is at least partially compensated for.

11. Device according to claim 9 or 10, **characterized in that** the laser (1) is a, particularly diode-pumped, Tm:YAG-, Tm,Ho:YAG-, Tm:YLF- or Tm,Ho:YLF-laser or a diode laser (16).

## Revendications

1. Procédé de soudage de matières thermoplastiques à lumière laser, la lumière laser étant dirigée dans une zone de soudage d'une pièce ou de plusieurs pièces adjacentes les unes aux autres en matière thermoplastique, **caractérisé en ce que** la lumière (2) présente une longueur d'onde de 1,8 à 2,2 µm, et **en ce que** les matières thermoplastiques présentent, à cette longueur d'onde, une absorption intrinsèque avec une longueur d'absorption de 1 à 10 mm.

2. Procédé selon la revendication 1, **caractérisé en ce que** la matière thermoplastique, dans laquelle sont formées les deux pièces (7, 8) est transparente ou translucide dans la gamme de longueurs d'onde de la lumière visible.

3. Procédé selon la revendication 1 ou 2, **caractérisé en ce que** la lumière laser (2) est dirigée dans la zone de soudage au moyen d'une optique (5) et/ou d'un guide de lumière (4).

4. Procédé selon la revendication 1, 2 ou 3, **caractérisé en ce que** dans la zone de soudage est réalisé un cordon de soudure, d'une largeur de 0,1 à 5 mm, de préférence d'une largeur de 0,7 à 2 mm, qui relie les deux pièces (7, 8).

5. Procédé selon l'une des revendications 1 à 4, **caractérisé en ce que** les deux pièces (7, 8) présentent une épaisseur de 50 µm à 5 mm, en particulier de 0,2 à 2 mm.

6. Procédé selon l'une des revendications 1 à 5, **caractérisé en ce que** les pièces (7, 8) sont disposées pendant le soudage dans la zone d'une liaison soudée (9) voulue entre des éléments de maintien (11, 12) dont un au moins laisse passer la lumière laser (2).

7. Procédé selon l'une des revendications 1 à 6, **caractérisé en ce que** la lumière laser (2) est au moyen du guide de lumière (4) directement approchée de la ou des pièces (7, 8) en matière thermoplastique.

8. Procédé selon l'une des revendications 1 à 7, **caractérisé en ce que** la lumière laser (2) est envoyée dans un guide de lumière (4) en forme de plaque et est approchée, au moyen du guide de lumière (4), par une zone de soudage en forme de ligne, de la ou des pièces (7, 8) en matière thermoplastique.

9. Dispositif de soudage de matières thermoplastiques à lumière laser selon l'une des revendications 1 à 8, comportant un laser en tant que source de lumière pour la lumière laser et comportant une optique et/ou un guide de lumière pour diriger la lumière laser dans une zone de soudage d'une pièce ou de plusieurs pièces adjacentes les unes aux autres en matière thermoplastique, **caractérisé en ce que** le laser (1) émet la lumière laser (2) avec une longueur d'onde de 1,8 à 2,2 µm.

10. Dispositif selon la revendication 9, **caractérisé en ce que** sur la face arrière des pièces (7, 8), opposée à l'optique (5) ou au guide de lumière (4), est prévu un élément de maintien (12) sous la forme d'un réflecteur (13) qui rétroréfléchit le reste de la lumière laser (2), parvenant à travers les pièces (7, 8), sur les pièces (7, 8), ce qui compense au moins en partie un échauffement irrégulier des pièces (7, 8) sur la zone de soudage (19), en raison de l'absorption intrinsèque progressive.

11. Dispositif selon la revendication 9 ou 10, **caractérisé en ce que** le laser (1) est en particulier un laser Tm:YAG à pompage par diode, un laser Tm, Ho:YAG, un laser Tm:YLF ou un laser Tm, Ho:YLF ou un laser à diode (16).
